# EUROPÄISCHE PATENTSCHRIFT

(11) **EP 2 134 666 B1**
(45) Veröffentlichungstag und Bekanntmachung des Hinweises auf die Patenterteilung: **28.09.2016**
(21) Anmeldenummer: 07856598.3
(22) Anmeldetag: 12.12.2007
(51) Int. Cl.: C04B 41/52, C04B 41/89, C03C 8/16, C03C 17/00, C03C 17/34, B41M 1/34, B44C 3/02, B44C 1/16

(54) **VERFAHREN ZUM DEKORIEREN VON GLAS- ODER KERAMIKARTIKELN**
METHOD FOR DECORATING GLASS OR CERAMIC ITEMS
PROCÉDÉ DE DÉCORER DES ARTICLES EN VERRE OU EN CÉRAMIQUE

(30) Priorität: 19.02.2007 DE 102007008443
(43) Veröffentlichungstag der Anmeldung: 23.12.2009
(73) Patentinhaber: Xennia Technology Limited, Letchworth Hertfordshire SG6 1LN (GB)
(72) Erfinder: YEONG, Kay, K., Hertfordshire SG6 1DT (GB); HIRT, Thomas, CH-9445 Rebstein (CH); FOX, James, E, Cambridge CB1 3HL (GB)
(74) Vertreter: Wagner, Kilian
(86) Internationale Anmeldenummer: PCT/EP2007/010850
(87) Internationale Veröffentlichungsnummer: WO 2008/101539

(56) Entgegenhaltungen:
- WO-A-92/15648
- FR-A- 2 750 419
- JP-A- 2004 099 432
- JP-A- 2005 170 705
- US-A- 4 420 501

## Beschreibung

Die Erfindung betrifft ein Verfahren zum Dekorieren von Glas- oder Keramikartikeln gemäß Anspruch 1.

Aus der US 6,694,885 B2 ist ein Verfahren zur Herstellung eines keramischen Abziehbildes bekannt, wobei auf ein Transfermedium zunächst eine Flux-Schicht mit Klebstoffen aufgebracht wird, auf die dann mittels eines Thermotransferdruckverfahrens ein Farbbild aufgedruckt wird. Oberhalb des Farbbildes befindet sich eine Flux-Schutzschicht. Optional können unterhalb der Farbbildschicht eine Opakschicht sowie eine weitere Flux-Klebstoff-Schicht aufgebracht werden. Aufgrund des Einsatzes eines Thermotransferdruckers bestehen besondere Anforderungen an die Zusammensetzung der aufzubringenden Schichten. Beispielsweise müssen die Flux-Schichten Wachs-Verbindungen enthalten. Der Thermotransferdruck ist u.a. aufgrund der notwendigen Verwendung von Farbbändern vergleichsweise schwierig handhabbar.

Aus der JP 2004-99432 A ist ein Verfahren bekannt, bei dem zunächst auf ein Substrat eine Glas-Frit-Schicht aufgebracht wird, auf die dann mittels eines Tintenstrahldruckers eine Pigmentschicht aufgedruckt wird, woraufhin das Substrat mit den beiden Schichten zum Schmelzen der Glas-Frit-Schicht erhitzt, d.h. gebrannt wird. Aufgrund des Vorsehens der unteren Glas-Frit-Schicht wird eine gute Haftung der gedruckten Bild-Schicht an dem Substrat gewährleistet. Nachteilig bei dem bekannten Verfahren ist, dass der Glanz und die Oberflächenbeschaffenheit des fertigen Produkts zu wünschen übrig lassen. Ein ähnlisches Verfahren ist aus der JP 2005-170705 A bekannt, wobei noch eine obere Glas-Frit-Schicht aufgebracht wird.

Der Erfindung liegt daher die Aufgabe zugrunde, ein Verfahren zum Dekorieren von Glas- oder Keramikartikeln vorzuschlagen, mit dem hochqualitative, insbesondere hochauflösende Dekorationen mit einer glänzenden und glatten Oberfläche herstellbar sind. Insbesondere soll das Verfahren auch bei kleinen Chargen wirtschaftlich einsetzbar sein.

Hinsichtlich des Verfahrens, welches sich bevorzugt zur Dekoration von Geschirr oder Trinkgläsern eignet, wird die Aufgabe mit den Merkmalen des Anspruchs 1 gelöst. Weiterbildungen der Erfindung sind in den Unteransprüchen aufgeführt. In den Rahmen der Erfindung fallen zudem sämtliche Kombinationen von zumindest zwei von in der Beschreibung, den Ansprüchen und/oder den Figuren offenbarten Merkmalen.

Insbesondere hinsichtlich des Verfahrens zum Dekorieren von Glas- oder Keramikartikeln liegt der Erfindung der Gedanke zugrunde, sowohl die Schicht aus zumindest einer Pigment-Formulierung, also die die eigentliche Abbildung ausbildende Schicht und die auf diese aufgebrachte obere Schicht aus einer Glas-Frit-Fomulierung mittels eines Tintenstrahldruckprozesses zu drucken. Durch die Verwendung von Tintenstrahldruckprozessen können hohe Auflösungen gute Kontraste sowie insgesamt hochwertige feinverteilte Schichten realisiert werden. Zudem lassen sich auch kleine Glas- oder Keramikartikelchargen wirtschaftlich bedrucken. Die untere aufzubringende Schicht aus der Glas-Frit-Formulierung kann beispielsweise mittels eines Siebdruckverfahrens, insbesondere unmittelbar auf das Substrat aufgebracht werden, wobei jedoch bevorzugt auch hierfür ein Tintenstrahldruckprozess angewendet wird. Am Schluss des Verfahrens steht ein Brennvorgang, bei dem der Glas- oder Keramikartikel mit sämtlichen Schichten gebrannt wird, wobei die Temperatur in einem Bereich zwischen 500°C und 1200°C liegt. Es muss mindestens die Schmelztemperatur der Glas-Frit-Partikel in den beiden Glas-Frit-Schichten erreicht werden. Im Rahmen der Erfindung liegt es zur Ausbildung der unteren und der oberen Glas-Frit-Schicht die gleiche Glas-Frit-Formulierung oder unterschiedliche Glas-Frit-Formulierungen zu verwenden. Bevorzug sind die Glas-Frit-Formulierungsschichten pigmentfrei.

Durch den sandwichartigen Schichtaufbau, also die Einbettung der Schicht aus der mindestens einen Pigment-Formulierung (Abbildungsschicht) zwischen zwei Glas-Frit-Formulierungsschichten, bei denen es sich bevorzugt um die einzigen Glas-Frit-Formulierungsschichten handelt, werden mehrere Vorteile erreicht. Die auf dem Glas- oder Keramikartikel unterste Glas-Frit-Schicht sorgt für eine gute Haftung des Schichtaufbaus auf dem Glas- oder Keramikartikel. Die in der endgültigen Position obere Glas-Frit-Formulierungsschicht schützt die darunterliegende Pigment-Formulierung-Schicht, bei der es sich bevorzugt um die einzige Schicht aus zumindest einer Pigment-Formulierung handelt, und sorgt gleichzeitig für einen hohen Glanz und eine glatte Oberfläche. Es liegt im Rahmen der Erfindung als Alternative mehrere Schichten aus jeweils mindestens einer Pigment-Formulierung unmittelbar übereinander anzuordnen, wobei diese Schichten dann von jeweils einer Schicht aus einer Glas-Frit-Formulierung umrahmt sind.

Gemäß einer ersten Alternative handelt es sich bei dem Substrat unmittelbar um den zu dekorierenden Glas- oder Keramikartikel. In diesem Fall entspricht die zuvor beschriebene Druckreihenfolge der beiden Glas-Frit-Schichten und der mindestens einen Pigment-Schicht um die Reihenfolge der Schichten auf dem Endprodukt. Unmittelbar auf dem Glas- oder Keramiksubstrat befindet sich somit als Haftvermittler die untere Schicht aus der Glas-Frit-Formulierung, welche bevorzugt im Tintenstrahldruckprozess auf das Substrat aufgebracht wird. Bei der zweiten Schicht handelt es sich um die mindestens eine aus einer oder mehreren Pigment-Formulierungen gebildete Schicht (Abbildungsschicht), die gemäß der Erfindung mittels eines Tintenstrahldruckprozesses aufgebracht wird. Oberhalb dieser gedruckten Pigment-Formulierungsschicht befindet sich die obere Schicht aus der mindestens einen Glas-Frit-Formulierung die gemäß der Erfindung mittels eines Tintenstrahldruckprozesses aufgebracht wird. In Weiterbildung der Erfindung kann es sich bei dieser oberen Schicht um die oberste, d.h. letzte Schicht handeln,

In Ausgestaltung der Erfindung handelt es sich bei der oberen Glas-Frit-Formulierungsschicht nicht um die letzte, sondern um die vorletzte Schicht, auf die eine letzte Schutzschicht aus einer Schutzschicht-Formulierung, insbesondere eine Lackschicht aufgebracht wird. Von besonderem Vorteil für die Qualität des Endproduktes ist es, wenn auch diese vierte Schicht mittels eines Tintenstrahldruckprozesses aufgebracht wird. Dabei ist die Schutzschicht bevorzugt derart beschaffen, dass diese rückstandslos beim finalen Erhitzungsprozess verbrennt bzw. verdampft. Die Schutzschicht ist bevorzugt derart ausgebildet, dass sie bereits bei einer Temperatur zwischen etwa 200°C und etwa 400°C, also unterhalb der Schmelztemperatur der Glas-Frit-Schichten zumindest teilweise flüssig wird und somit ein Zusammenhalten der darunter angeordneten Schichten gewährleistet. Bevorzugt ist eine Ausführungsform, bei der zwischen der unteren Schicht, bestehend aus der Glas-Frit-Formulierung, und dem Glas- oder Keramikartikel keine weitere Schicht vorgesehen ist, die untere Schicht der Glas-Frit-Formulierung also demnach die unterste Schicht auf dem Glas- oder Keramikartikel bildet.

Im Hinblick auf die Ausbildung der obersten Schicht gibt es zwei Möglichkeiten. Entweder wird die oberste Schicht von der oberen Schicht der Glas-Frit-Formulierung oder von der fakultativen Schutzschicht gebildet, welche sich auf der oberen Schicht der Glas-Frit-Formulierung befindet, wobei die zweite (einzige) Abbildungsschicht entweder aus einer einzigen Pigment-Formulierung gebildet ist, oder aus mehreren Pigment-Formulierungen besteht. Für den Fall, dass diese Schicht aus mehreren Pigment-Formulierungen besteht, können die unterschiedlichen Pigment-Formulierungen schichtweise, also quasi als Unterschichten der zweiten Schicht angeordnet oder miteinander vermischt bzw. nebeneinander angeordnet sein. Ebenso ist es denkbar, dass zwischen den zwei Glas-Frit-Schichten mehrere, insbesondere zwei Schichten aus jeweils mindestens einer Pigment-Formulierung vorgesehen sind. Bevorzugt ist jedoch eine Ausführungsform mit einer einzigen Schicht aus einer Pigment-Formulierung, also eine Ausführungsform mit insgesamt drei Schichten (ohne Schutzschicht) oder mit vier Schichten (mit Schutzschicht).

Gemäß einer zweiten Alternative handelt es sich bei dem Substrat nicht unmittelbar um das eigentlich zu dekorierende Produkt, also den zu dekorierenden Glas- oder Keramikartikel, sondern um ein Transfermedium, wie beispielsweise ein In-Wasser abziehbares Papier (Water-Slide-Paper). Bevorzugt wird die Schichtenanordnung erst von dem Transfermedium, insbesondere in einem Wasserbad abgelöst und auf den zu dekorierenden Glas- oder Keramikartikel aufgebracht, nachdem sämtliche Schichten auf dieses Transfermedium aufgebracht worden sind, woraufhin dann der Erhitzungsprozess, also das Brennen zum Schmelzen der Glas-Frit-Schichten folgt.

Dabei kann das Transferieren bzw. Anbringen der Schichtenanordnung auf dem Glas- oder Keramikartikel derart erfolgen, dass die zuerst auf das Transfermedium aufgebrachte Schicht auch die unterste Schicht auf dem Glas- oder Keramikartikel bildet, oder dass die Schichten quasi gewendet werden und die zuletzt aufgebrachte, insbesondere aufgedruckte Schicht die unterste Schicht auf dem Glas- oder Keramikartikel bildet. Bevorzugt ist die zuletzt beschriebene Variante (best mode).

Insbesondere zum Schutz der Schichtenanordnung beim Ablöseprozess wird in Ausgestaltung der Erfindung zeitlich vor dem Ablösen der Schichten von dem Transfermedium eine Schutzschicht, insbesondere eine Lackschicht auf die obere Schicht aus der Glas-Frit-Formulierung aufgebracht, vorzugsweise mittels eines Tintenstrahlprozesses aufgedruckt. Diese zuletzt aufgebrachte, auf dem Transfermedium obere Schicht bildet dann bevorzugt auch die oberste Schicht (Schutzschicht) auf dem Glas- oder Keramikartikel.

Alternativ zum Aufbringen der Schutzschicht als oberste Schicht auf das Transfermedium, ist es möglich, die Schutzschicht als unterste Schicht, also unmittelbar auf das Transfermedium aufzubringen, wobei auf diese zuerst aufgebrachte, vorzugsweise aufgedruckte Schutzschicht das Sandwich aus den beiden Glas-Frit-Schichten und der mindestens einen dazwischenliegenden Pigmentschicht aufgebracht wird. In diesem Fall bildet die zuletzt aufgebrachte Glas-Frit-Schicht die unterste Schicht auf dem zu dekorierenden Glas- oder Keramikartikel. Hierdurch wird gewährleistet, dass sich die Schutzschicht am Glas- oder Keramikartikel auf der Oberseite befindet und somit rückstandslos verbrennen bzw. verdampfen kann, ohne bei diesem Verbrennungs- bzw. Verdampfungsprozess etwaige darüberliegende Schichten zu beschädigen.

Die zuletzt beschriebene Ausführungsform mit unmittelbar auf dem Transfermedium befindlicher Schutzschicht bringt wesentliche Vorteile mit sich. So ist es beispielsweise möglich, ein Transfermedium großtechnisch mit einer Schutzschicht zu versehen und dieses optimierte Transfermedium als Verfahrensgrundlage zum Bedrucken zu verwenden. Gegebenenfalls ist es sogar denkbar das Transfermedium großtechnisch nicht nur mit einer Schutzschicht, sondern zusätzlich auch mit der unteren Schicht der Glas-Frit-Formulierung zu versehen, wobei die beiden Schichten bevorzugt getrocknet und zwischengelagert werden und dann erst bei Bedarf mit der Pigment-Schicht und der oberen Schicht der Glas-Frit-Formulierung mittels eines Tintenstrahldruckprozesses bedruckt werden. Das Aufbringen der Schutzschicht auf das Transfermedium muss dabei nicht zwangsläufig im Tintenstrahldruckprozess erfolgen, sondern kann beispielsweise mittels eines Siebdruckverfahrens vorgenommen werden. Das gleiche gilt für die bereits auf die Schutzschicht aufgebrachte untere Schicht der Glas-Frit-Formulierung. Ein derart, großtechnisch hergestelltes Transfermedium kann zwischengelagert und, direkt zum Endanwender transportiert und dort mittels einer Tintenstrahldruckvorrichtung bedruckt werden, woraufhin die Schichtenanordnung von dem Transfermedium abgelöst, auf den Glas- oder Keramikartikel aufgebracht und dann zusammen mit dem Glas- oder Keramikartikel gebrannt wird. Ebenso ist es denkbar, ein Transfermedium bereitzustellen, auf dem als unterste Schicht großtechnisch, beispielsweise mittels eines Siebdruckverfahrens die untere Schicht aus der Glas-Frit-Formulierung aufgebracht wurde.

Im Hinblick auf die Ausbildung der mindestens einen Schicht aus der mindestens einen Pigment-Formulierung gibt es unterschiedliche Möglichkeiten. Insbesondere zu Zwecken einer verbesserten Haftvermittlung zu den die zweite Schicht umgebenden Glas-Frit-Schichten ist es von Vorteil, wenn in die Pigment-Formulierungsschicht Glas-Frit-Material untergemischt, wird. Dabei kann das Glas-Frit-Material bzw. können die Glaspartikel unmittelbar in die mindestens eine Pigment-Formulierung eingebracht sein, so dass die Pigment-Formulierung zusammen mit dem Glas-Frit aus einem gemeinsamen Druckkopf gedruckt wird. Daneben ist es denkbar, die Glas-Frit-Formulierung in einem separaten Druckkopf unterzubringen und die Pigment-Formulierung und die Glas-Frit-Formulierung gleichzeitig aus nebeneinander angeordneten Druckköpfen aufzudrucken.

Insbesondere zur Erzielung einer optimalen Leuchtkraft und einer optimalen Farbtreue der durch die Pigementformulierungsschicht gebildeten Abbildung ist es dagegen von Vorteil, die Schicht der mindestens einen Pigment-Formulierung (völlig) glaspartikelfrei zu drucken, also weder Glas-Frit-Partikel in die eigentliche Pigment-Formulierung zu mischen oder gleichzeitig mit der mindestens einen Pigment-Formulierung ein Glas-Frit-Material in die Schicht zu drucken.

Zur Optimierung der Verfahrensgeschwindigkeit ist es von Vorteil, wenn zumindest zwei der aufzubringenden, insbesondere aufzudruckenden Schichten nass-in-nass gedruckt werden, d.h. zumindest eine der Schichten zumindest noch feucht ist, bevor die nächste Schicht aufgebracht, insbesondere aufgedruckt wird.

Die Qualität des Endproduktes kann verbessert werden, wenn zumindest eine der Schichten, insbesondere durch Bestrahlen mit Infrarot-Licht getrocknet und/oder gehärtet wird, bevor auf diese die nächste Schicht aufgebracht, insbesondere aufgedruckt wird. Bevorzugt enthalten hierzu zumindest einige Schichten UV-härtende Materialien, insbesondere mindestens ein Harz.

Bevorzugt erfolgt das Trocknen und/oder Härten unmittelbar nach dem Aufbringen der entsprechenden Schicht. Hohe Verfahrensgeschwindigkeiten können erzielt werden, wenn sämtliche Tintenstrahldruckprozesse, mindestens jedoch das Aufdrucken der mindestens einen Schicht aus der mindestens einen Pigment-Formulierung und das Aufdrucken der oberen Schicht aus der Glas-Frit-Formulierung inline durchgeführt werden. Es ist auch denkbar, sämtliche Schichten inline aufzubringen, insbesondere aufzudrucken. Für das Inline-Aufdrucken der Pigmentschicht(en) und der oberen Frit-Formulierungsschicht ist es von Vorteil, ein bereits vorkonfektioniertes Transfermedium zu verwenden, auf das bereits eine Schutzschicht und/oder die untere Schicht der Glas-Frit-Formulierung aufgebracht, vorzugsweise im Tintenstrahldruckprozess aufgedruckt sind/ist.

Insbesondere für eine Inline-Produktion ist es von Vorteil, wenn zumindest die Tintenstrahldruckprozesse zum Aufdrucken der Pigmentschicht und der oberen Frit-Formulierungsschicht, vorzugsweise sämtliche Tintenstrahldruckprozesse mittels einer gemeinsamen Druckkopfanordnung durchgeführt werden, wobei die Druckkopfanordnung unterschiedliche Druckköpfe für die unterschiedlichen Schichten aufweist. Während einer Relativbewegung der Druckkopfanordnung zu dem zu bedruckenden Substrat können somit gleichzeitig nebeneinander angeordnete und in der Höhe versetzte Schichten gedruckt werden.

Insbesondere zur Durchführung der Tintenstrahldruckprozesse des zuvor beschriebenen Verfahrens kann eine Druckvorrichtung verwendet werden, aufweisend mindestens eine gemeinsam verstellbare Druckkopfanordnung (Verstellschlitten), wobei die Druckkopfanordnung mindestens einen mit einer Glas-Frit-Formulierung beaufschlagten Druckkopf und mindestens einen mit einer Pigment-Formulierung beaufschlagten Druckkopf aufweist. Bei den zur Anwendung kommenden Druckköpfen handelt es sich bevorzugt um Drop-on-Demand Druckköpfe. Die beschriebene Druckvorrichtung eignet sich insbesondere zum Drucken der mindestens einen Pigmentschicht und der oberen Glas-Frit-Formulierungsschicht auf die untere Schicht der mindestens einen Glas-Frit-Formulierungsschicht. Gegebenenfalls kann die Druckvorrichtung bzw. die Druckkopfanordnung der Druckvorrichtung derart weitergebildet werden, dass auch weitere Schichten, also die untere Schicht der Glas-Frit-Formulierung und/oder die Schutzschicht mit der gemeinsamen Druckkopfanordnung druckbar sind. Um einen flächigen Druck auf ein Substrat, entweder einen Glas- oder Keramikartikel oder ein Transfermedium realisieren zu können, ist die Druckkopfanordnung relativ zu dem Substrat in eine Transportrichtung sowie in eine quer zur Transportrichtung verlaufende Druckrichtung bewegbar. Diese Relativbewegungen können entweder dadurch realisiert werden, dass ausschließlich die Druckkopfanordnung oder ausschließlich das Substrat verstellbar angeordnet ist. Bevorzugt ist jedoch eine Ausführungsform, bei der die Druckkopfanordnung ausschließlich entlang einer Druckachse und das Substrat entlang einer um 90° hierzu verlaufenden Transportachse verstellbar ist.

Bevorzugt ist eine Anordnung des mindestens einen Druckkopfes für die Glas-Frit-Formulierung und des mindestens einen Druckkopfes für die Pigment-Formulierung, bei der die beiden Druckköpfe in Transportrichtung des Substrates gesehen hintereinander angeordnet sind. Soll beispielsweise mit der Druckkopfanordnung ein vorkonfektioniertes Transfermedium mit bereits aufgebrachter unterer Glas-Frit-Formulierungsschicht bedruckt werden, so befindet sich der Druckkopf für die Glas-Frit-Formulierung bevorzugt in Transportrichtung des Substrates gesehen hinter dem Druckkopf für die Pigment-Formulierung, damit die Pigment-Formulierung bereits aufgedruckt ist, wenn das Substrat in die Reichweite des Druckkopfes für die Glas-Frit-Formulierung kommt.

Für den Fall, dass sämtliche der bevorzugt drei Sandwich-Schichten im Tinten-Strahldruckprozess aufgedruckt werden sollen, ist es von Vorteil, wenn sowohl vor als auch hinter (in Transportrichtung des Substrates gesehen) dem mindestens einen Druckkopf für die Pigment-Formulierung jeweils mindestens ein Druckkopf für die bzw. eine Glas-Frit-Formulierung angeordnet ist.

Soll mit der Druckkopfanordnung auch die zuvor erläuterte Schutzschicht aufgedruckt werden, so ist es von Vorteil mindestens einen Druckkopf für die Schutzschichtformulierung vorzusehen. Dieser Druckkopf für die Schutzschichtformulierung ist beim unmittelbaren Bedrucken des Substrates bevorzugt in Transportrichtung des Substrates gesehen an vorderster Stelle angeordnet. Wird ein Transfermedium bedruckt, so kommt es für die Anordnung des Druckkopfes für die Schutzschichtformulierung darauf an, ob die Schutzschicht als unterste Schicht unmittelbar auf dem Transfermedium aufgebracht sein soll, oder ob die Schutzschicht auf der oberen Schicht der Glas-Frit-Formulierung aufgebracht sein soll. Im letzteren Fall ist der mindestens eine Druckkopf für die Schutzschichtformulierung bevorzugt in Transportrichtung des Substrates gesehen an vorderster Stelle anordnet, ansonsten an hinterster Stelle.

Weiterhin ist es denkbar, zusätzlich oder alternativ mindestens einen Druckkopf für eine Schutzschichtformulierung in Druckrichtung vor oder hinter einem Druckkopf für eine Glas-Frit-Formulierung anzuordnen. In diesem Fall muss jedoch der Druckkopf mehrfach in Druckrichtung verstellt werden, ohne dabei das Substrat zu transportieren, um übereinanderliegende Schichten aufbringen zu können.

Bevorzugt weist die Druckvorrichtung eine Trocknungseinrichtung und/oder eine Härtungseinrichtung zum Trocknen und/oder Härten einzelner Schichten vor dem Aufbringen der nächsten Schicht auf. Von besonderem Vorteil ist es, die Trocknungs- und/oder Härtungseinrichtung, insbesondere ein IR-Strahler auf der Druckkopfanordnung in Druckrichtung hinter den Druckköpfen anzuordnen, so dass eine gerade gedruckte Schicht unmittelbar mittels der Trocknungs- und/oder Härtungseinrichtung getrocknet und/oder gehärtet wird.

Insbesondere zum Untermischen von Glas-Frit-Material unter die Schicht der Pigment-Formulierung, ist es von Vorteil in Druckrichtung vor und/oder hinter dem mit der Pigment-Formulierung beaufschlagten Druckkopf einen mit der Glas-Frit-Formulierung beaufschlagten Druckkopf anzuordnen. Hierdurch können in die mindestens eine, bevorzugt einzige Schicht der mindestens einen Pigment-Formulierung gleichzeitig mindestens eine Glas-Frit-Formulierung und mindestens eine Pigment-Formulierung einfließen. Auf diese Anordnung kann jedoch, insbesondere dann, wenn die Pigment-Formulierungsschicht glas-frit-frei ausgeführt wird, verzichtet werden.

Gemäß einer möglichen Ausführungsform weist die Druckkopfanordnung mindestens zwei in Transportrichtung hintereinander angeordnete Reihen von Druckköpfen auf, wobei in jeder Reihe von Druckköpfen alternierend mit Glas-Frit-Formulierung und Pigment-Formulierung beaufschlagte Druckköpfe angeordnet sind. Hierbei muss jedoch eine Substratstelle mehrfach von der Druckvorrichtung überfahren werden, ohne dass zwischendurch ein Substratvorschub in Transportrichtung stattfindet, um mehrere übereinander angeordnete Schichten realisieren zu können.

Bevorzugt ist eine Ausführungsform, bei der die Druckkopfanordnung mindestens zwei in Transportrichtung hintereinander angeordnete und sich entlang der Druckachse erstreckende Reihen von Druckköpfen aufweist, wobei in einer ersten Reihe in Druckrichtung hintereinander angeordnete, insbesondere mit unterschiedlichen Pigment-Formulierungen beaufschlagte Druckköpfe und in der zweiten Reihe ,(vorzugsweise ausschließlich) mit der Glas-Frit-Formulierung beaufschlagte Druckköpfe vorgesehen sind. Bevorzugt ist jeweils mindestens ein Druckkopf für die Farbe Cyan, die Farbe Magenta, die Farbe Gelb und die Farbe Schwarz vorgesehen, wobei die Schicht der Pigment-Formulierungen, also die eigentliche Abbildung, mittels zumindest mehrerer vorzugsweise sämtlicher der pigmentformulierungsbeaufschlagten Druckköpfe hergestellt wird.

Bevorzugt befindet sich in Transportrichtung des Substrates relativ zu der Druckkopfanordnung vor und/oder hinter der zweiten Reihe von mit der Glas-Frit-Formulierung beaufschlagten Druckköpfen mindestens eine Reihe mit Druckköpfen, die mit der Schutzschichtformulierung beaufschlagt sind.

Für Fälle, in denen auch die erste Schicht der Glas-Frit-Formulierung mit einem Tintenstrahldruckprozess aufgebracht werden soll, ist es von Vorteil, in Transportrichtung des Substrates gesehen, vor und hinter den beiden Seiten der Druckköpfe mit der Pigment-Formulierung jeweils eine Reihe von mit der bzw. einer Glas-Frit-Formulierung beaufschlagten Druckköpfen anzuordnen.

Nachfolgend wird eine Glas-Frit-Formulierung zur Verwendung beim Dekorieren von Glas- oder Keramikpartikeln beschrieben die sich aufgrund ihrer Zusammensetzung für das Aufbringen in einem Tintenstrahldruckprozess, vorzugsweise mit einer zuvor beschriebenen Druckvorrichtung eignet. Diese Glas-Frit-Formulierung zeichnet sich durch Glas-Frit-Partikel mit einer Schmelztemperatur aus einem Temperaturbereich zwischen etwa 500°C und etwa 1200°C, vorzugsweise zwischen etwa 750°C und etwa 900°C aus. Der die Glas-Frit-Partikel umfassende Feststoff-Gewichtsanteil der Glas-Frit-Formulierung beträgt etwa zwischen 20 % und etwa 60 %. Wesentlich ist, dass die Absetzrate der Feststoffe maximal 1 Millimeter pro Minute beträgt und dass die Viskosität der Glas-Frit-Formulierung in einem Bereich zwischen etwa 0,02 Pas und etwa 0,05 Pas bei einer Temperatur aus einem Bereich zwischen etwa 20°C und etwa 40°C liegt. Ferner umfasst die Glas-Frit-Formulierung mindestens ein Dispergierungsmittel und mindestens ein Lösungsmittel. Das Dispergierungsmittel hat dabei die Funktion die chemische Stabilität der Glas-Frit-Formulierung sicherzustellen und gleichzeitig für eine geringe Absetzgeschwindigkeit der Feststoffbestandteile zu sorgen. Die so erhaltene Glas-Frit-Formulierung ist besonders zur Verwendung mit Tintenstrahl-Druckköpfen, vorzugsweise mit Drop-on-Demand-Druckköpfen geeignet. Durch diese Zusammensetzung wird eine homogene Dispersion mit einer guten Redispergierbarkeit bereitgestellt. Eine gute Redispergierbarkeit ist insbesondere dann von Vorteil, wenn die Glas-Frit-Formulierung längere Zeit, ohne durchgemischt zu werden, gelagert wird. Bevorzugt ist die Redispergierbarkeit der Glas-Frit-Formulierung derart, dass die Glas-Frit-Formulierung durch 5-minütiges Rühren bei einer Rührer-Umdrehungszahl von etwa 120 Umdrehungen pro Minute redispergierbar ist. Die Stabilität gegen Partikelwachstum ist bevorzugt derart, dass weniger als 10 % Zunahme des durchschnittlichen Partikeldurchmessers nach einer Woche bei einer Temperatur von etwa 45°C zu beobachten ist. Ein Pumpvorgang (Umwälzvorgang) bei dem Einsatz der Pigment-Formulierung oder der Glas-Frit-Formulierung in einem Tintenstrahldrucker ist ausreichend, um 90 % der beinhalteten Feststoffe noch nach 100 Betriebstagen dispergiert zu halten. Um diesen Wert noch weiter zu verbessern, kann fakultativ ein Rühreinsatz in der Druckvorrichtung vorgesehen werden. Die homogene Dispersion wirkt sich weiterhin positiv bei dem eigentlichen Druckprozess aus, da ein Verstopfen der Düsen des Druckkopfes verhindert wird. Weiterhin wirkt sich die hohe Stabilität gegen Partikelwachstum positiv auf die Verminderung der Verstopfungsneigung der Druckdüsen aus. Diese Eigenschaften resultieren letztendlich in einem exzellenten Erscheinungsbild der Dekoration und einer hohen Widerstandsfähigkeit der aufgedruckten Schichten gegenüber Licht, Feuchtigkeit und anderen Umwelteinflüssen.

Vorteilhaft ist vorgesehen, dass der d₅₀-Wert (Meridian der Partikelgrößenverteilung) der Feststoffe der Glas-Frit-Formulierung zwischen etwa 1 µm und etwa 10 µm liegt, bevorzugt liegt der d₅₀₋Wert zwischen etwa 1 µm und etwa 5 µm, besonders bevorzugt zwischen etwa 1 µm und etwa 2 µm.

Um die Glas-Frit-Formulierung optimal mittels eines Tintenstrahldruckprozesses, vorzugsweise mit einem Drop-on-Demand-Druckkopf auftragen zu können, ist es von Vorteil, wenn der Gewichtsanteil der Glasfritpartikel an der Gesamt-Glas-Frit-Formulierung etwa zwischen 40 % und 60 %, vorzugsweise etwa 50 % beträgt. Bevorzugt beträgt der Gewichtsanteil des Dispergierungsmittels etwa zwischen 7 % und 18 % des Gesamtgewichtes der Glas-Frit-Formulierung, vorzugsweise etwa 12,5 %. Gemäß einer besonders vorteilhaften Ausgestaltung beträgt der maximale Glasfritpartikeldurchmesser etwa 3 µm, vorzugsweise etwa 2,7 µm. Von besonderem Vorteil ist es, wenn der maximale Glasfritpartikeldurchmesser weniger als 2 µm beträgt.

Es hat sich als vorteilhaft herausgestellt, als Lösungsmittel Diacetonalkohol, insbesondere mit einem Gewichtsanteil zwischen etwa 30 % und etwa 40 %, vorzugsweise von etwa 36 % zu verwenden. Diacetonalkohol hat ein gutes Verflüchtigungsgleichgewicht, das einerseits für eine vernünftige Trocknungszeit auf dem Substrat sorgt und andererseits nicht zu schnell in den Druckkopfdüsen verdampft. Die Oberflächenspannung des Diacetonalkohols ist bevorzugt größer als 30 Dyn/cm, wodurch sich die Glas-Frit-Formulierung optimal mittels eines Tintenstrahldruckprozesses drucken lässt.

Vorzugsweise enthält die Glas-Frit-Formulierung ein Polymer-Bindemittel, vorzugsweise mit einem Gewichtsanteil von etwa 0,5 % bis etwa 2 %. Es hat sich als vorteilhaft für die Stabilität der Glas-Frit-Formulierung herausgestellt, als Polymer-Bindemittel ein Styrol-Acrylsäure-Copolymer zu verwenden, oder ein Polymer-Bindemittel, das ein Styrol-Acrylsäure-Copolymer umfasst.

Weiterhin positiv wirkt sich der Zusatz von Kieselsäure, vorzugsweise mit einem Gewichtsanteil zwischen etwa 0,5 % bis etwa 1,5 % aus. Der Zusatz von Kieselsäure (Silika) wirkt sich positiv auf die chemische Stabilität der Dispersion aus, indem sie die Anziehung des Dispergierungsmittels zu der Glasfritpartikeloberfläche verbessert und somit ein Partikelwachstum verlangsamt oder verhindert. Ferner führt der Zusatz von Kieselsäure zu einer geringeren Absetzgeschwindigkeit und zur Vermeidung von Ausflockungserscheinungen, wobei sich die abgesetzten Stoffe gut redispergieren lassen.

Von Vorteil ist eine möglichst geringe Viskosität der Glas-Frit-Formulierung. Bevorzugt beträgt die Viskosität etwa 0,002 Pas bis etwa 0,03 Pas. Vorzugsweise beträgt die Viskosität etwa 0,002 Pas bis etwa 0,02 Pas, jeweils bei einer Temperatur aus einem Bereich zwischen etwa 20°C und etwa 40°C.

Besonders bevorzugt ist eine Ausführungsform der Glas-Frit-Formulierung, bei der die Glas-Frit-Formulierung frei von Pigmenten ist.

Nachfolgend wird eine Pigment-Formulierung zur Verwendung beim Dekorieren von Glas- oder Keramikpartikeln beschrieben, die sich insbesondere durch eine hervorragende Eignung für einen Tintenstrahldruckprozess auszeichnet. Bei dieser Pigment-Formulierung handelt es sich um eine besonders homogene Dispersion mit sehr guten Redispergierungseigenschaften. Bevorzugt lässt sich die Pigment-Formulierung durch 5-minütiges Rühren bei einer Umdrehungszahl des Rührers von etwa 120 Umdrehungen pro Minute redispergieren. Ferner ist die Pigment-Formulierung stabil gegen Partikelwachstum, wobei das Partikelwachstum bevorzugt weniger als 10 % innerhalb einer Woche bei einer Temperatur von etwa 45°C beträgt. Ein Pumpvorgang (Umwälzvorgang) bei dem Einsatz der Pigment-Formulierung oder der Glas-Frit-Formulierung in einem Tintenstrahldrucker ist ausreichend, um 90% der Feststoffe noch nach 100 Betriebstagen dispergiert zu halten. Um diesen Wert noch weiter zu verbessern, kann fakultativ ein Rühreinsatz vorgesehen werden. Die Pigment-Formulierung eignet sich aufgrund ihrer homogenen Dispersität besonders zum Drucken mit Tintenstrahldruckköpfen, insbesondere Drop-on-Demand-Druckköpfen. Ein Verstopfen der Druckkopfdüsen wird mit Vorteil verhindert. Ferner ist eine mit einer derartigen Pigment-Formulierung gedruckte Schicht widerstandsfähig gegenüber Licht, Feuchtigkeit und anderen Umweltbedingungen. Zusätzlich weist die mit dieser Pigment-Formulierung hergestellte Abbildung einen exzellenten Kontrast, eine hohe Leuchtkraft sowie ein exzellentes Gesamt-Erscheinungsbild auf.

Die Pigment-Formulierung umfasst mindestens ein anorganisches Pigment. Der Feststoff-Gewichtsanteil (inklusive des anorganischen Pigmentes) beträgt etwa 20 % bis etwa 60 %, wobei die Absetzrate der Feststoffe maximal 1 Millimeter pro Minute beträgt. Die Viskosität liegt bevorzugt unterhalb von 0,05 Pas bei einer Temperatur zwischen etwa 20°C und etwa 40°C. Die Pigment-Formulierung umfasst weiterhin mindestens ein Dispergierungsmittel sowie ein Lösungsmittel. Das Dispergierungsmittel hat die Aufgabe für eine gute chemische Stabilität sowie für eine geringe Absetzgeschwindigkeit der Feststoffanteile zu sorgen.

Der d₅₀-Wert der Partikelgrößenverteilung der Feststoffe der Pigment-Formulierung liegt zwischen etwa 1 µm und etwa 10 µm, vorzugsweise zwischen etwa 1 µm und etwa 5 µm.

Bevorzugt ist eine Pigment-Formulierung, bei der Gewichtsanteil des Pigments etwa 40 % bis etwa 60 %, vorzugsweise etwa 50 % bis etwa 60 % beträgt. Bevorzugt beträgt der Gewichtsanteil an Dispergierungsmittel etwa 8 % bis etwa 15 %, vorzugsweise etwa 10 % bis etwa 12 %. Der Pigment-Durchmesser beträgt bevorzugt maximal etwa 2,7 µm, vorzugsweise maximal etwa 1,5 µm. Besonders bevorzugt beträgt der Pigment-Durchmesser weniger als 1 µm.

Bevorzugt ist eine Ausführungsform, bei der als Lösungsmittel Diacetonalkohol eingesetzt wird. Dieser weist ein gutes Flüchtigkeitsgleichgewicht auf, was dazu führt, dass vernünftige Trocknungszeiten auf dem Substrat erreicht werden können, wohin gleichfalls ein zu schnelles Verdampfen in den Düsen des Druckkopfes verhindert wird. Die Oberflächenspannung des zur Anwendung kommenden Diacetonalkohols beträgt bevorzugt mehr als 30 Dyn/cm, wodurch die Pigment-Formulierung optimal in einem Tintenstrahldruckprozess druckbar ist. Weiterhin wird durch den Zusatz des Diacetonalkohols eine Tröpfchenbildung verhindert, ebenso wie ein Absetzen im bzw. am Druckkopf. Vorzugsweise wird ein Polymer-Bindemittel, vorzugsweise mit einem Gewichtsanteil zwischen etwa 0,5 % und etwa 2 % zugesetzt. Besonders von Vorteil ist es, wenn das Polymer-Bindemittel ein Styrol-Acrylsäure-Polymer umfasst oder aus einem solchen besteht.

Der Zusatz von Kieselsäure (Silika) hat sich bewährt, insbesondere mit einem Gewichtsanteil zwischen etwa 0,5 % und etwa 1,5 %. Die Kieselsäure sorgt für eine chemische Stabilität der Dispersion durch Verbesserung der Anziehung des Dispergierungsmittels zu der Pigmentoberfläche. Hierdurch wird ein schnelles Partikelwachstum verhindert. Weiterhin sorgt Kieselsäure für eine geringe Absetzgeschwindigkeit und verhindert Ausflockungserscheinungen, wobei abgesetzte Feststoffe aufgrund der Gesamtzusammensetzung der Pigment-Formulierung leicht redispergiert werden können.

Von besonderem Vorteil ist es, wenn die Viskosität nur zwischen etwa 0,02 Pas und etwa 0,03 Pas, vorzugsweise nur zwischen 0,002 Pas und etwa 0,02 Pas bei einer Temperatur zwischen etwa 20° C und etwa 40°C beträgt.

Gemäß einer möglichen Ausgestaltungsvariante der Pigment-Formulierung umfasst die Pigment-Formulierung Glasfritpartikel mit einem Gewichtsanteil zwischen etwa 10 % und 30 %. Gemäß einer Weiterbildung beträgt der maximale Glasfritpartikeldurchmesser etwa 3 µm, vorzugsweise etwa 2,7 µm, insbesondere etwa 2 µm, besonders bevorzugt etwa 1,5 µm oder weniger als 1 µm. Von besonderem Vorteil ist es, wenn gemäß einer Weiterbildung der d₅₀-Wert der Partikelgrößenverteilung der Glasfritpartikel zwischen etwa 1 µm und etwa 10 µm liegt. Bevorzugt liegt die d₅₀-Wert der Partikelgrößenverteilung zwischen etwa 1 µm und etwa 5 µm.

Alternativ dazu kann die Pigment-Formulierung glaspartikelfrei ausgebildet sein. Mit dieser Ausführungsform können optimale Druckqualitäten hinsichtlich Kontrast und Leuchtkraft erzielt werden.

Bevorzugt handelt es sich bei der zur Anwendung kommenden Schutzschichtformulierung um eine Lackschicht, insbesondere unter Zusatz von Xylen und/oder Glycolacetat, insbesondere Butylglycolacetat.

Die Erfindung betrifft nicht die Glas-Frit-Formulierung und nicht die Pigment-Formulierung in Alleinstellung, und auch nicht die Kombination der Glas-Frit-Formulierung und der Pigment-Formulierung zur Verwendung beim Dekorieren von Glas- oder Keramikartikeln, insbesondere durch Auftragen der Formulierungen in einem Tintenstrahldruckprozess. Durch synergistische Wirkungen zwischen der Glas-Frit-Formulierung und der Pigment-Formulierung, die nicht Teil dieser Erfindung sind, können jedoch qualitativ hochwertige Dekorationen mit einem hohen Kontrast sowie einer hohen Auflösung hergestellt werden.

Ferner betrifft die Erfindung nicht einen mit der Glas-Frit-Formulierung sowie der Pigment-Formulierung wie zuvor beschriebenen beschichteten und gebrannten Glas- oder Keramikartikel.

Nachfolgend wird ein vorkonfektioniertes Transfermediun beschrieben, welches mit einer unteren Schutzschicht, insbesondere einer Lackschicht versehen ist. Bevorzugt ist auf die unterste Schutzschicht zusätzlich bereits die erste Schicht der Glas-Frit-Formulierung aufgebracht. Alternativ dazu ist es denkbar das Transfermedium ausschließlich mit der ersten Schicht der Glas-Frit-Formulierung als unterste Schicht zu versehen, wobei das vorkonfektionierte Transfermedium zum Bedrucken mit einer zuvor beschriebenen Schicht, mindestens einer Pigment-Formulierung und einer zuvor beschriebenen Schicht einer Glas-Frit-Formulierung mittels eines Tintenstrahldruckprozesses geeignet ist. Bevorzugt sind die auf das Transfermedium aufgebrachten Schichten bzw. ist die auf das Transfermedium aufgebrachte Schicht getrocknet und/oder gehärtet, um das Transfermedium lagern und transportieren zu können.

Ausführungsbeispiele der Erfindung werden nun nachfolgend anhand der Zeichnungen beschrieben. Diese sollen die Ausführungsbeispiele nicht notwendigerweise maßstäblich darstellen, vielmehr sind die Zeichnungen, die nur zur Erläuterung dienen, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Es zeigen:
- Fig. 1:: ein mit vier übereinander angeordneten Schichten bedrucktes Substrat,
- Fig. 2:: eine alternative Ausführungsform eines mit vier Schichten bedruckten Substrates,
- Fig. 3:: eine schematische Darstellung einer Druckvorrichtung mit einer Druckkopfanordnung und einem in eine Transportrichtung verstellbaren Substrat,
- Fig. 4:: eine schematische Darstellung einer alternativen Druckkopfanordnung und
- Fig. 5:: eine Darstellung einer weiteren alternativen Druckkopfanordnung.

In den Fig. sind gleiche Bauteile und Bauteile mit der gleichen Funktion mit den gleichen Bezugszeichen gekennzeichnet.

Zunächst werden bevorzugte Zusammensetzungen von vier unterschiedlichen Pigment-Formulierungen, der Glas-Frit-Formulierung und der Schutzschichtformulierung in der folgenden Tabelle 1 beschrieben (best mode).

**Tabelle 1**

| | Pigment-Formulieung Cyan | Pigment-Formulierung, Magenta | Pigment-Formulierung Gelb | Pigment-Formulierung Schwarz | Glas-Frit-Formulierung | Schutzschicht-formulierung |
|---|---|---|---|---|---|---|
| Lösungsmittel: Dincelonalkohol | 55.1 | 51.8 | 51.2 | 39.6 | 48.6 | |
| Dispersionsmittel: Disperbyk 168 | | 8.0 | 8.0 | 9.9 | 10.0 | |
| Dispersionsmittel: Tego Disperse 610S | 3.9 | | | | | |
| Bindemittel/Harz Joncryl 678 | 1.6 | 0.3 | 0.3 | 1.0 | 0.4 | |
| Kieselsäure Cab-O-Sil M5 | | | 0.7 | | 1.2 | |
| Pigment: Mason Color Vivid Blue 6306 | 39.4 | | | | | |
| Pigment: Ferro Magenta 171710 | | 39.9 | | | | |
| Pigment: Mason Color Canary Yellow 6410 | | | 39.8 | | | |
| Mason Color Black Onyx 6612 | | | | 49.5 | | |
| Glasfrit: Ferro Frit 10169 | | | | | 39.8 | |
| Lack: Ferro Lacquer 83894 | | | | | | 25.0 |
| Xylen | | | | | | 58.3 |
| Butyl Glycol Acetat | | | | | | 16.7 |

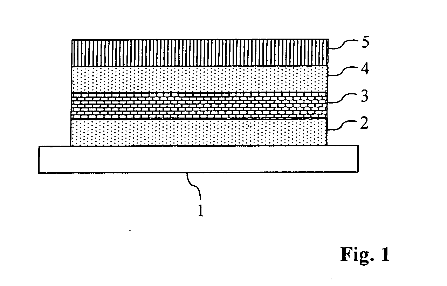

In Fig. 1 ist ein Substrat 1 gezeigt, bei dem es sich entweder unmittelbar um den zu dekorierenden Glas- oder Keramikartikel, oder ein Transfermedium handelt. Auf das Substrat wurde, beispielsweise mittels eines Siebdruckverfahrens, vorzugsweise jedoch mittels eines Tintenstrahldruckprozesses eine untere Schicht 2 einer Glas-Frit-Formulierung aufgebracht. Bevorzugt wurde diese erste Schicht vor dem Aufbringen einer unmittelbar darüberliegenden Schicht 3 getrocknet und/oder gehärtet. Die Pigment-Schicht 3 ist dabei aus mehreren Pigment-Formulierungen gebildet. Die zur Anwendung kommenden Pigment-Formulierungen haben dabei die Farben Cyan, Magenta, Gelb und Schwarz. Sämtliche, die Pigment-Schicht 3 bildenden Pigment-Formulierungen wurden mittels eines Tintenstrahldruckprozesses aufgebracht.

Insbesondere nach dem Trocknen und/oder dem Härten der Pigment-Schicht 3 wurde auf die Pigment-Schicht 3 eine obere Schicht 4 aus einer Glas-Frit-Formulierung mittels eines Tintenstrahldruckprozesses aufgebracht. Bevorzugt handelt es sich bei der für die obere Glas-Frit-Formulierungs-Schicht zur Anwendung kommenden Glas-Frit-Formulierung um die identische Glas-Frit-Formulierung zur Bildung der unteren Schicht 2. Gegebenenfalls kann jedoch auch eine abweichende Glas-Frit-Zusammensetzung gewählt werden. Auf die bevorzugt getrocknete obere Schicht 4 aus der Glas-Frit-Formulierung wird fakultativ unmittelbar eine Schicht 5, vorzugsweise mittels eines Tintenstrahldruckprozesses aufgebracht. Bei der obersten Schicht 5 handelt es sich um eine Lackschicht (Schutzschicht). Als abschließender Verfahrensschritt wird das Substrat 1 mit den vier Schichten 2, 3, 4, 5 bei etwa 850°C gebrannt. Bereits bei etwa 250°C bis etwa 350°C verflüssigt sich die oberste Schicht 5 (Schutzschicht), wobei diese Schicht im Laufe des Brennprozesses rückstandslos aufgelöst wird.

Wenn es sich bei dem Substrat 1 gemäß Fig. 1 um ein Transfermedium handelt, beispielsweise um ein In-Wasserablösliches-Papier (Water-Slide-Paper) müssen zunächst die vorzugsweise vier Schichten 2, 3, 4, 5 insbesondere in einem Wasserbad von dem Substrat 1 abgelöst und auf den zu dekorierenden Glas- oder Keramikartikel aufgebracht werden. Dabei ist es bevorzugt, dass die untere Schicht 2 der Glas-Frit-Formulierung auch die unterste Schicht auf dem Glas- oder Keramikartikel bildet. Falls sich oberhalb der oberen Schicht 4 der Glas-Fit-Formulierung keine weitere Schicht befindet, ist es auch denkbar, dass die obere Schicht 4 der Glas-Frit-Formulierung die unterste Schicht auf den zu dekorierenden Glas- oder Keramikartikel bildet. Wesentlich ist, dass eine der die zweite Schicht 3 der Pigment-Formulierungen umgebenden Schichten 2, 4, also eine Glas-Frit-Formulierungsschicht die unterste Schicht auf dem zu dekorierenden Glas- oder Keramikartikel bildet. Hierdurch haftet die gesamte Schichtenanordnung optimal auf dem Endprodukt. Die nach dem Brennprozess oberste Glas-Frit-Formulierungsschicht sorgt für eine glatte Oberfläche und für eine glänzende Erscheinung des Druckbildes.

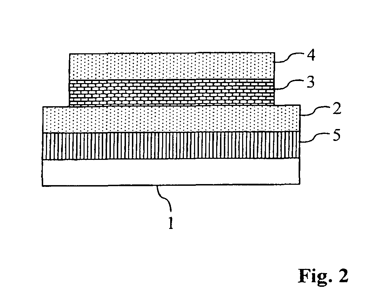

In Fig. 2 ist ein alternatives Ausführungsbeispiel der Schichtenanordnung gezeigt. In dem Ausführungsbeispiel gemäß Fig. 2 handelt es sich bei dem in der Zeichnungsebene unten angeordneten Substrat um ein Transfermedium. Auf dieses Transfermedium wurde als unterste Schicht eine Schutzschicht 5 (Schutzschichtformulierung) aufgebracht. Hierfür ist beispielsweise ein Siebdruckverfahren oder ein Tintenstrahldruckprozess geeignet. Auf diese unterste Schutzschicht 5, insbesondere nach deren Trocknung und/oder Härtung wurde eine untere Schicht 2 einer Glas-Frit-Formulierung aufgebracht, insbesondere im Siebdruckverfahren oder mittels eines Tintenstrahldruckprozesses. Auf die getrocknete untere Schicht der Glas-Frit-Formulierung wurde mittels eines Tintenstrahldruckprozesses eine Schicht aus mindestens einer Pigment-Formulierung, vorzugsweise aus mehreren Pigment-Formulierungen mit den Farben Cyan, Magenta, Gelb und Schwarz aufgedruckt. Nach dem Trocknen der Schicht 3 der Pigment-Formulierungen, wurde unmittelbar auf diese eine obere Schicht 4 einer Glas-Frit-Formulierung mittels eines Tintenstrahldruckprozesses aufgebracht. Nach dem Trocknen und/oder Härtung der oberen Schicht 4 der Glas-Frit-Formulierung wird die Schichtenanordnung bestehend aus der untersten Schutzschicht 5, der unmittelbar darauf befindenen unteren Glas-Frit-Formulierungsschicht 2, der unmittelbar darauf befindlichen Pigment-Formulierungsschicht 3 und der unmittelbar darauf befindlichen oberen Schicht der Glas-Frit-Formulierung 4 von dem Substrat 1, insbesondere in einem Wasserbad, abgelöst und derart auf einem Glas- oder Keramikartikel aufgebracht, dass die obere Schicht 4 der Glas-Frit-Formulierung die unterste Schicht auf dem Glas- oder Keramikartikel bildet.

Bevorzugt werden die Schichten aus mindestens einer Pigment-Formulierung 3 und der darauf aufgebrachten oberen Schicht der Glas-Frit-Formulierung auf das bereits mit der Schutzschicht 5 und der unteren Schicht 2 der Glas-Frit-Formulierung 2 vorkonfektioniertes Transfermedium 1 aufgebracht. Dabei erfolgt das Aufbringen der Schicht 3 der mindestens einen Pigment-Formulierung und der oberen Schicht 4 der Glas-Frit-Formulierung bevorzugt inline mit einer noch zu erläuternden Druckvorrichtung.

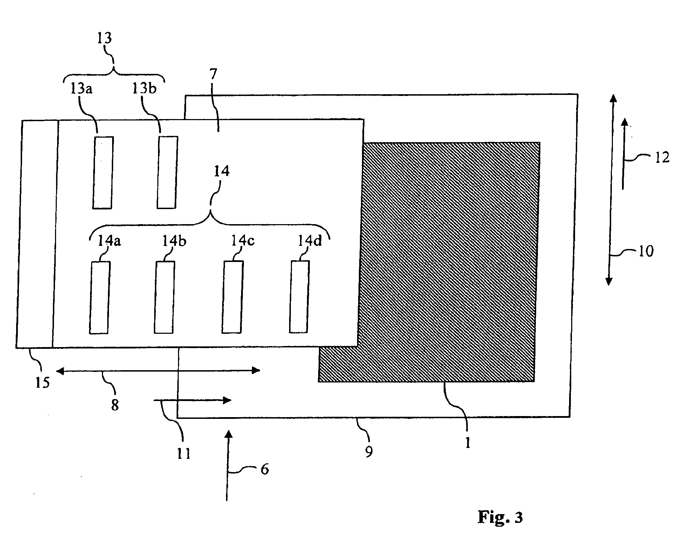

In Fig. 3 ist ein möglicher Aufbau einer derartigen Druckvorrichtung 6 schematisch gezeigt. Die Druckvorrichtung 6 umfasst eine Druckkopfanordnung 7, die entlang einer Druckachse 8 in der Art eines Schlittens verstellbar angeordnet ist. Ein auf einem Transportband 9 angeordnetes Substrat 1 ist entlang einer Transportachse 10, die rechtwinklig zur Druckachse 8 verläuft verstellbar angeordnet. Beim Druckvorgang wird in dem gezeigten Ausführungsbeispiel die Druckkopfanordnung 7 in Druckrichtung 11 verstellt. Nach einem Druckvorgang, also bei der Rückstellung der Druckkopfanordnung 7 entlang der Druckachse 8 entgegen der Druckrichtung 11 wird das Substrat 1 in Transportrichtung 12 verstellt. Es ist auch denkbar in beide Druckachsrichtungen zu drucken, wobei in diesem Fall nach Beendigung eines Druckvorgangs in eine der Druckrichtungen ein Substratvorschuss erfolgt.

Die Druckkopfanordnung 7 umfasst zwei sich entlang der Druckachse 8 erstreckende und in Transportrichtung 12 hintereinander angeordnete Reihen 13, 14 von Druckköpfen 13a, 13b sowie 14a bis 14d. Bei sämtlichen Druckköpfen 13a, 13b sowie 14a bis 14d handelt es sich um Drop-on-Demand-Druckköpfe.

Der in der Zeichnungsebene linke Druckkopf 13a der in Transportrichtung 12 des Substrates vorderen Reihe 13 ist mit einer Glas-Frit-Formulierung beaufschlagt, der in der Zeichnungsebene daneben angeordnete Druckkopf 13b ist mit einer Schutzschicht-Formulierung beaufschlagt.

Die Druckköpfe 14a bis 14d der zweiten Reihe 14 sind mit unterschiedlichen Pigment-Formulierungen beaufschlagt. Dabei ist Druckkopf 14a mit einer cyan-farbenen Pigment-Formulierung, Druckkopf 14b mit einer magenta-farbenen Pigment-Formulierung, Druckkopf 14c mit einer gelben Pigment-Formulierung und Druckkopf 14d mit einer schwarzen Pigment-Formulierung beaufschlagt.

Soll beispielsweise das in Fig. 1 dargestellte Ausführungsbeispiel mit der Druckvorrichtung 6 hergestellt werden, so wird zunächst das Substrat 1 mittels des Druckkopfes 13a mit einer unteren Schicht 2 einer Glas-Frit-Formulierung versehen, wobei nach jedem Druckvorgang, bei dem die Druckkopfanordnung von in der Zeichnungsebene links nach in der Zeichnungsebene rechts, also in Druckrichtung 11 bewegt wird, das Substrat 1 entsprechend der Druckkopfbreite in Transportrichtung 12 verstellt werden.

Daraufhin wird das Substrat 1 entgegen der Transportrichtung 12 zurückgestellt und es wird mit den gleichzeitig arbeitenden Druckköpfen 14a bis 14d bei einem Druckvorgang eine Schicht von Pigment-Formulierungen aufgebracht. Gleichzeitig wird aus dem Druckkopf 13a (in der Zeichnungsebene eine Zeile weiter oben) auf die in einem vorherigen Druckschritt aufgebrachte Schicht der Pigment-Formulierungen eine obere Glas-Frit-Formulierungsschicht 4 aufgebracht. Daraufhin wird das Substrat 1 wieder entsprechend der Breite der Druckköpfe in Transportrichtung 12 verstellt, wodurch mittels der Druckköpfe 14a bis 14d eine weitere Schicht von Pigment-Formulierungen aufgebracht wird und gleichzeitig mittels des Druckkopfes 13a auf die zuvor aufgebrachte Schicht 3 der Pigment-Formulierungen eine obere Schicht 4 der Glas-Frit-Formulierung aufgebracht wird, usw. Nachdem das Substrat 1 auf diese Weise mit der oberen Glas-Frit-Formulierungsschicht ausgestattet wurde, wird das Substrat 1 entgegen der Transportrichtung 12 schrittweise verstellt, wobei zwischen dem Transportschritten das Bedrucken der oberen Glas-Frit-Formulierungsschicht 3 mit einer Schutzschichtformulierung mit Hilfe des Druckkopfes 13b erfolgt.

Nach dem Drucken jeder Schicht wird die gerade aufgedruckte Schicht mittels der automatisch mitlaufenden Trocknungseinrichtung 15, insbesondere einem Infrarotstrahler, getrocknet.

Eine Alternative, nicht gezeigte Ausführungsform sieht vor, dass in Transportrichtung 12 vor und hinter der Reihe 14 von Druckköpfen für die Pigment-Formulierungen jeweils mindestens ein Druckkopf, vorzugsweise jeweils eine Reihe von Druckköpfen, für eine Glas-Frit-Formulierung angeordnet ist, um sowohl die untere Glas-Frit-Formulierungsschicht als auch die obere Glas-Frit-Formulierungsschicht inline aufdrucken zu können. Fakultativ befindet sich in Transportrichtung 12 vor oder hinter diesen sandwichartig angeordneten Reihen von Druckköpfen mindestens ein Druckkopf zum Aufbringen einer Schutzschichtformulierung.

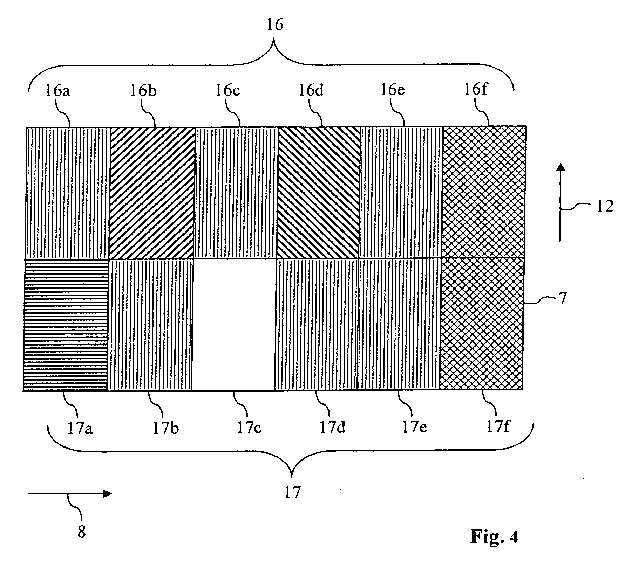

In Fig. 4 ist ein alternatives Ausführungsbeispiel einer Druckkopfanordnung 7 gezeigt. Die Druckkopfanordnung 7 weist zwei Reihen 16, 17 von Druckköpfen auf, wobei es sich bei den Druckköpfen 16a, 16c und 16e sowie bei den Druckköpfen 17b, 17d und 17e um jeweils mit einer Glas-Frit-Formulierung beaufschlagte Druckköpfen und bei den Druckköpfen 16b, 16d, 17a und 17e um mit einer Pigment-Formulierung beaufschlagte Druckköpfen handelt, wobei die Pigment-Formulierungen der die Druckköpfe 17a, 16b, 17c und 16d beaufschlagenden Pigment-Formulierungen unterschiedlich gefärbt sind (Cyan, Magenta, Gelb, Schwarz). Die beiden in der Zeichnungsebene seitlichen Druckköpfe 16f und 17f sind mit einer Schutzschicht-Formulierung beaufschlagt.

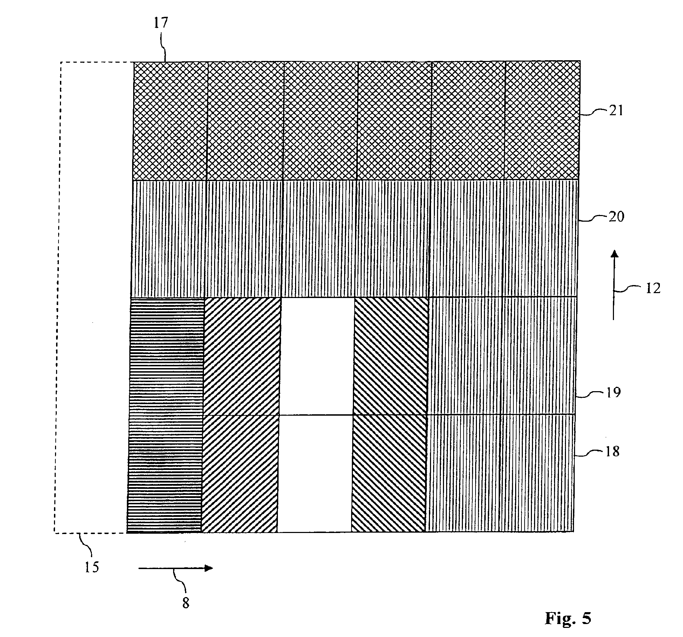

In Fig. 5 ist eine alternative Druckkopfanordnung 7 gezeigt. Diese kann zusätzlich fakultativ mit einer insbesondere seitlichen Trocknungseinrichtung 15 ausgestattet sein. Die Druckkopfanordnung 7 gemäß Fig. 5 weist vier Reihen 18, 19, 20, 21 von Druckköpfen auf, wobei in den zwei Reihen 18, 19 jeweils vier in Druckrichtung 8 nebeneinander angeordnete, mit unterschiedlichen Pigment-Formulierungen beaufschlagte Druckköpfe angeordnet sind. Mit der gezeigten Druckkopfanordnung können u.a. zwei unmittelbar übereinanderliegende Pigmentschichten gedruckt werden, wobei die Pigmentschichten von zwei Glas-Frit-Schichten eingerahmt werden. Neben diesen jeweils vier Druckköpfen befinden sich zwei Druckköpfe für Glas-Frit-Formulierungen zum Untermischen von Glas-Frit-Partikel in die Pigment-Formulierungsschichten. Auf diese (seitlichen) Glas-Frit-Formulierungsdruckköpfe kann gegebenenfalls verzichtet werden. In der Zeichnungsebene oberhalb der Reihen 16, 17 befindet sich in Transportrichtung 12 gelegen eine Reihe 20, die aus sechs, jeweils ausschließlich mit einer Glas-Frit-Formulierung beaufschlagten Druckköpfen besteht. In der Zeichnungsebene darüber (also in Transportrichtung 12 davor) befindet sich eine Reihe 21 mit sechs mit der Schutzschicht-Formulierung beaufschlagten Druckköpfen. Auf die Reihe 21 kann verzichtet werden, wenn das in Fig. 2 gezeigte Ausführungsbeispiel hergestellt werden soll und das Transfermedium bereits mit einer Schutzschicht und einer unteren Schicht einer Glas-Frit-Formulierung beschichtet ist. Ggf. können auch mehrere unabhängig voneinander verstellbare Druckkopfanordnungen mit jeweils mindestens einem Druckkopf in Transportrichtung hintereinander angeordnet werden.

Fakultativ kann unterhalb der Reihe 18 und 19 von Druckköpfen noch eine weitere Reihe von mit einer Glas-Frit-Formulierung beaufschlaten Druckköpfen vorgesehen werden, insbesondere dann, wenn sämtliche Schichten inline gedruckt werden sollen.

## Patentansprüche

1. Verfahren zum Dekorieren von Glas- oder Keramikartikeln, mit den folgenden Verfahrensschriften:
• Beschichten eines Substrates (1) durch:
• Aufbringen einer unteren Schicht (2) einer Glas-Frit-Formulierung;
• Aufbringen einer Abbildung als mindestens eine, vorzugsweise ausschließlich eine, Schicht (3) aus zumindest einer Pigment-Formulierung auf die unmittelbar auf die untere Schicht (2) der Glas-Frit-Formulierung mittels eines Tintenstrahldruckprozesses;
• Aufbringen einer oberen Schicht (4) einer Glas-Frit-Formulierung auf die Schicht (3) aus zumindest einer Pigment-Formulierung;
• Erhitzen des Glas- oder Keramikartikels mit den Schichten (2, 3, 4) zumindest auf Schmelztemperatur der Gas-Frit-Partikel der unteren und oberen Schicht (2, 4),
**dadurch gekennzeichnet,**
**dass** die obere Schicht (4) der Glas-Frit-Formulierung mittels eines Tintenstrahldruckprozesses aufgebracht wird.

2. Verfahren nach Anspruch 1,
**dadurch gekennzeichnet,**
**dass** das Substrat (1) unmittelbar der Glas- oder Keramikartikel ist.

3. Verfahren nach Anspruch 2,
**dadurch gekennzeichnet,**
**dass** auf die obere Schicht (4) aus der Glas-Frit-Formulierung vor dem Erhitzen eine Schutzschicht (5) aufgedruckt wird.

4. Verfahren nach einem der vorhergehenden Ansprüche,
**dadurch gekennzeichnet,**
**dass** die untere Schicht (2) aus der Glas-Frit-Formulierung die untere Schicht auf dem Glas- oder Keramikartikel ist.

5. Verfahren nach einem der Ansprüche 1, 2 und 4,
**dadurch gekennzeichnet,**
**dass** die obere Schicht (4) aus der Glas-Frit-Formulierung die oberste Schicht auf dem Glas- oder Keramikartikel ist.

6. Verfahren nach einem der Ansprüche 3 oder 4,
**dadurch gekennzeichnet,**
**dass** die Schutzschicht (5) die oberste Schicht auf dem Glas- oder Keramikartikel ist.

7. Verfahren nach Anspruch 1,
**dadurch gekennzeichnet,**
**dass** das Substrat (1) ein Transfermedium ist, und dass die Schichten (2, 3, 4, 5) von dem Transfermedium abgelöst und vor dem Erhitzen auf den Glas- oder Keramikartikel transferiert werden.

## Claims

1. A method for decorating glass or ceramic items, with the following method steps:
• coating of a substrate (1) by:
• applying a lower layer (2) of a glass frit formulation;
• applying an image as at least one, preferably exclusively one, layer (3) of at least one pigment formulation directly onto the lower layer (2) of the glass frit formulation by means of an inkjet printing process;
• applying an upper layer (4) of a glass frit formulation onto the layer (3) of at least one pigment formulation;
• heating the glass or ceramic item with the layers (2, 3, 4) at least to melting temperature of the glass frit particles of the lower and upper layer (2, 4),
**characterized in that**
the upper layer (4) of the glass frit formulation is applied by means of an inkjet process.

2. The method according to Claim 1,
**characterized in that**
the substrate (1) is directly the glass or ceramic item.

3. The method according to Claim 2,
**characterized in that**
a protective layer (5) is printed onto the upper layer (4) of the glass frit formulation before the heating.

4. The method according to one of the preceding claims,
**characterized in that**
the lower layer (2) of the glass frit formulation is the lower layer on the glass or ceramic item.

5. The method according to one of Claims 1, 2 and 4,
**characterized in that**
the upper layer (4) of the glass frit formulation is the uppermost layer on the glass or ceramic item.

6. The method according to one of Claims 3 or 4,
**characterized in that**
the protective layer (5) is the uppermost layer on the glass or ceramic item.

7. The method according to Claim 1,
**characterized in that**
the substrate (1) is a transfer medium, and that the layers (2, 3, 4, 5) are detached from the transfer medium and, before the heating, are transferred onto the glass or ceramic item.

## Revendications

1. Procédé pour décorer des articles en verre ou en céramique, comprenant les étapes de procédé suivantes:
• revêtir un substrat (1) par:
• application d'une couche inférieure (2) d'une formulation de fritte de verre;
• application d'une illustration sous forme d'au moins une, de préférence d'exclusivement une couche (3) en au moins une formulation de pigment directement sur la couche inférieure (2) de la formulation de fritte de verre au moyen d'un procédé d'impression au jet d'encre;
• application d'une couche supérieure (4) d'une formulation de fritte de verre sur la couche (3) en au moins une formulation de pigment;
• chauffer l'article en verre ou en céramique avec les couches (2, 3, 4) au moins à la température de fusion des particules de fritte de verre de la couche inférieure et supérieure (2, 4),
**caractérisé en ce que**
l'on applique la couche supérieure (4) de la formulation de fritte de verre au moyen d'un procédé d'impression au jet d'encre.

2. Procédé selon la revendication 1,
**caractérisé en ce que**
le substrat (1) est directement l'article en verre ou en céramique.

3. Procédé selon la revendication 2,
**caractérisé en ce que**
l'on imprime une couche de protection (5) avant le chauffage sur la couche supérieure (4) de la formulation de fritte de verre.

4. Procédé selon l'une quelconque des revendications précédentes,
**caractérisé en ce que**
la couche inférieure (2) de la formulation de fritte de verre est la couche inférieure sur l'article en verre ou en céramique.

5. Procédé selon une des revendications 1, 2 et 4,
**caractérisé en ce que**
la couche supérieure (4) de la formulation de fritte de verre est la couche la plus supérieure sur l'article en verre ou en céramique.

6. Procédé selon une des revendications 3 ou 4,
**caractérisé en ce que**
la couche de protection (5) est la couche la plus supérieure sur l'article en verre ou en céramique.

7. Procédé selon la revendication 1,
**caractérisé en ce que**
le substrat (1) est un médium transfert, et **en ce que** les couches (2, 3, 4, 5) sont détachées du médium transfert et sont transférées sur l'article en verre ou en céramique avant le chauffage.
